# EUROPÄISCHE PATENTSCHRIFT

(11) **EP 2 338 767 B1**
(45) Veröffentlichungstag und Bekanntmachung des Hinweises auf die Patenterteilung: **28.11.2012**
(21) Anmeldenummer: 10015458.2
(22) Anmeldetag: 09.12.2010
(51) Int. Cl.: B62D 25/10, E05B 65/19, B60J 5/10

(54) **Betätigung und Verriegelung für eine Abdeckung eines Fahrzeugs**
Actuating and locking mechanism for a cover for a vehicle
Système d'actionnement et verrouillage pour un couvercle de véhicule

(30) Priorität: 19.12.2009 DE 102009059652
(43) Veröffentlichungstag der Anmeldung: 29.06.2011
(73) Patentinhaber: Magna Car Top Systems GmbH, 74321 Bietigheim-Bissingen (DE)
(72) Erfinder: Just, Jan, Bloomfield Hills MI 48301 (US); Rösler, Matthias, Dipl.- Ing., 70180 Stuttgart (DE)
(74) Vertreter: Völger, Silke Beatrix

(56) Entgegenhaltungen:
- EP-A1- 0 649 765
- DE-C1- 19 960 905

## Beschreibung

Die vorliegende Erfindung betrifft eine Vorrichtung zur Betätigung und Verriegelung für eine Abdeckung eines Fahrzeugs, insbesondere eines Kraftfahrzeugs, mit den Merkmalen des Oberbegriffs des Anspruchs 1.

Es ist bekannt, zum Öffnen von Abdeckungen bei Fahrzeugen, diese Abdeckungen mit einem Antrieb über eine Betätigung von einer geschlossenen Stellung in eine geöffnete Stellung zu bewegen. Hierzu können die Abdeckungen mittels eines Schwenkgelenks am Fahrzeugaufbau oder an anderen Bauteilen des Fahrzeugs angebracht sein. Das Schwenken der Abdeckung erfolgt hierbei um eine Schwenkachse oder mittels eines Hebelgetriebes entlang einer im Raum angeordneten Kurvenbahn. Auch können die Betätigung und der Antrieb der Betätigung sowohl am Fahrzeugaufbau wie auch an der Abdeckung angebracht sein. Eine weitere, gebräuchliche Ausführung besteht darin, dass der Antrieb der Betätigung und die Betätigung getrennt voneinander positioniert sind und über Verbindungsteile, so genannte Koppeln miteinander verbunden sind.

Da zum Bewegen der Abdeckungen aus ihren Endpositionen erhebliche Antriebskräfte notwendig sein können, werden häufig hydraulische Antriebe verwendet. Elektrische Antriebe benötigen entsprechende Untersetzungsgetriebe, die aber erheblich längere Betätigungszeiten benötigen und entsprechend der zur Betätigung notwendigen Kraft groß dimensionierte und viel Einbauraum benötigende Getriebe verwenden. Auch weisen derartige Getriebe ein hohes Eigengewicht auf, das bei einer direkten Montage an der Abdeckung die Betätigung der Abdeckung zusätzlich erschwert.

Für die Betätigung werden in der Regel Hebelgetriebe verwendet, die aus unterschiedlichen Lenkern zusammengesetzt sind. Diese Lenker ermöglichen einen geringeren Einbauraum, da diese oft in einer parallelen Lage zueinander gebracht werden können. Auch sind diese Hebelgetriebe relativ einfach und kostengünstig herzustellen. In Zusammenwirkung mit zusätzlichen Verriegelungselementen, die in Form von einschwenkbaren Bolzen oder Haken ausgebildet sein können, können die Hebelgetriebe in ihren Bewegungen verriegelt werden, so dass in besonders kompakter Bauform mehrere Funktionen zusammengefasst werden können.

Derartige Antriebe und Hebelgetriebe mit zusätzlichen Verriegelungen werden für bewegbare Abdeckungen, wie beispielsweise Verdeckkastendeckel, Kofferraumdeckel oder auch für bewegbare Verdecke verwendet. Selbstverständlich können diese auch in angepasster Form für weitere Abdeckungen oder Klappen an Fahrzeugen zum Einsatz kommen.

Ein Verdeckkastendeckel entsprechend der DE 199 60 905 C1 überspannt einen Verdeckkasten, der als Stauraum für ein Fahrzeugverdeck in einem Aufbau eines Kraftfahrzeugs dient. Unter Vermittlung von Lenkerteilen einer Viergelenkkinematik ist der Verdeckkastendeckel mit ersten und zweiten Lenkern eines Lenkersystems verbunden. Der erste Lenker ist an einem Übertragungshebel angelenkt; der zweite Lenker an einem Steuerhebel. An letzterem greift eine Kolbenstange eines Stellantriebs an. Viergelenkkinematik und Lenkersystem sind in der Weise ausgebildet, dass sie in der geschlossenen Stellung des Verdeckkastendeckels eine Übertotpunktlage einnehmen.

Die DE 101 56 011 A1 befasst sich mit einer verstellbaren Hutablage -Deckelelement 4- eines Personenkraftwagens, die über eine Stellkinematik beweg- und feststellbar ist. Die Stellkinematik umfasst eine Deckelkinematik und eine Blockierkinematik. Die Deckelkinematik weist einen ersten Viergelenkhebel und einen zweiten Viergelenkhebel auf. Der erste Viergelenkhebel ist unter Zwischenschaltung eines Koppellenkers mit einem Totpunktlenker der Blockierkinematik verbunden, der an einer Konsole eines Aufbaus des Personenkraftwagens gelenkig gelagert ist. Am Totpunktlenker greift ein Zwischenlenker an, der an einem am Aufbau gelagerten Übertotpunktlenker angelenkt ist. Besagter Übertotpunktlenker ist mittels eines Aktuators beeinflussbar. In Endlagen des Dachelements befindet sich die Blockierkinematik jeweils in einer Übertotpunktlage.

Aus der DE 198 01 853 C1 ist eine Antriebseinrichtung für einen Verdeckkastendeckel bekannt, wobei der Verdeckkastendeckel von einer Schließstellung in eine Offenstellung und vice versa bewegbar ist. Der Verdeckkastendeckel kann in seiner Schließstellung über einen mit der Antriebseinrichtung gekoppelten Verschluss verriegelt bzw. entriegelt werden. Hierzu weist die Antriebseinrichtung ein über einen Antrieb zu betätigendes Viergelenkgetriebe auf. Ein Lenker des Viergelenks steuert einen Schlepphebel, der über ein Verbindungselement den Verschluss für den Verdeckkastendeckel betätigt. Bei geschlossenem und verriegeltem Verdeckkastendeckel befindet sich der Schlepphebel in einer Position, in der er durch den Lenker mechanisch gegen zurückdrehen gesichert ist.

Die vorliegende Erfindung beschäftigt sich mit dem Problem, eine Abdeckung eines Fahrzeugs, insbesondere eines Kraftfahrzeugs mittels eines Hebelgetriebes bewegbar anzutreiben, wobei das Hebelgetriebe die Abdeckung in wenigstens einer Position sicher verriegelt. Das Hebelgetriebe soll mit wenigen Teilen einfach und kostengünstig herstellbar sein.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, dass bei Fahrzeugen mit zu öffnenden und zu schließenden Abdeckungen, die Abdeckungen über einen Betätigungsmechanismus bewegt werden. Hierbei schwenkt die Abdeckung um eine Schwenkachse zwischen Abdeckung und Fahrzeugaufbau und wird dabei über eine mechanische Vorrichtung von einer geschlossenen Stellung in eine geöffnete Stellung bewegt. Die mechanische Vorrichtung kann dabei durch einen Seilzug gebildet werden oder über ein aus mehreren Hebeln bestehenden Hebelgetriebe bestehen. Derartige Hebelgetriebe sind in der Regel mittels eines Verbindungselements mit der Abdeckung verbunden und weisen den Vorteil auf, dass die Abdeckung unmittelbar durch das koppelnde Verbindungselement aufgeschwenkt, bzw. aufgedrückt werden kann und über dasselbe Verbindungselement wieder verschlossen, bzw. zugezogen werden kann.

Das Verbindungselement wird hierbei direkt durch einen Stellantrieb, beispielsweise einem hydraulischen Zylinder oder einer elektrischen Betätigungseinheit angetrieben um die Abdeckung zu bewegen. Da häufig die zu bewegenden Abdeckungen groß und schwer ausgebildet sind und dazu noch mit vorbestimmten, sich teilweise ändernden Geschwindigkeiten bewegt werden müssen, ist es sinnvoll entsprechende Über- oder Untersetzungsgetriebe zu verwenden. Diese Getriebe werden hierzu in das Betätigungssystem eingefügt und können hierzu an der Abdeckung oder am Fahrzeugaufbau angeordnet sein.

Als Über- oder Untersetzungsgetriebe können Rädergetriebe, Getriebe mit Kulissenantrieben oder Hebelgetriebe eingesetzt werden. Rädergetriebe, insbesondere Zahnrädergetriebe sind in der Herstellung sehr aufwändig, teuer und benötigen einen verhältnismäßig großen Einbauraum, weisen jedoch als Vorteil die Möglichkeit einer Selbsthemmung auf. Bei einer Selbsthemmung kann die Abdeckung nicht durch eine ungewollte Betätigung des Zahnradgetriebes in Bewegung gesetzt werden, z. B. durch die auf das Zahnradgetriebe wirkende Gewichtslast der Abdeckung. Dies kann in den Endlagen der Abdeckung zu deren Verriegelung genutzt werden, so dass die Abdeckung durch diese Selbsthemmung in ihrer Position (Endlage) unbewegbar gehalten wird. Hierbei kann auf zusätzliche Verriegelungsmechanismen verzichtet werden.

Das Ziel der Erfindung ist es, diesen Effekt in einer Endlage des Hebelgetriebes durch eine besonders geschickte Anordnung der Lenker und Hebel zu erreichen. Gleichzeitig sollen aber die Lenker und Hebel als Antrieb zur Bewegung der Abdeckung genutzt werden können. Erreicht wird dies dadurch, dass zwei Lenker bei Erreichen der Endlage der Abdeckung in eine hintereinander angeordnete Strecklage geraten und diese mit geringem Kraftaufwand überfahren. Unter Überfahren versteht man, dass die Schwenkbewegung aus dem Bereich des einwandfreien, normalen Schwenkbereichs der Lenker/Hebel, (nicht klemmenden und blockierenden Schwenkbereich) in einen, die freie Bewegung der Lenker/Hebel klemmenden Bereich geschwenkt, überdrückt werden, aus dem durch eine von außen auf das Hebelgetriebe wirkende Kraft (z.B. Gewichtskraft der Abdeckung, ein Aufziehen oder Aufdrücken der Abdeckung) ein Zurückschwenken in den normalen Schwenkbereich von alleine nicht mehr möglich ist. Damit die Hebel dennoch aus dieser Position wieder zurückgeschwenkt werden können, muss wenigstens einer der beiden Lenker durch einen Antrieb über die Strecklage bewegt werden. Erst dann kann der "freie" Schwenkvorgang erfolgen.

Von besonderem Vorteil ist die besonders kompakte Anordnung von Hebelgetriebe, hydraulischem Zylinder, sowie der Anlenkung (Kniehebel) der Koppelstange als vormontierbare Einheit in einem Hauptlager. Diese Einheit kann vollständig unabhängig vom Einbau in das Fahrzeug vormontiert und eingestellt werden, was im Servicefall ebenfalls von großem Vorteil ist. In diesem Fall wird das Hauptlager als komplette Einheit ausgebaut und beispielsweise durch eine Tauscheinheit ersetzt, so dass die Servicezeiten minimal gehalten werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine seitliche Ansicht auf die geschlossene Abdeckung mit im Hauptlager montierten Hebelgetriebe und Koppelstange,
- Fig. 2: eine Seitenansicht auf die geöffnete Abdeckung mit Koppelstange und Hebelgetriebe in Betätigungsstellung,
- Fig. 3: eine vergrößerte Ansicht des Hebelgetriebes mit Übertotpunkt-verriegelung zweier Lenker,
- Fig. 4: eine perspektivische Ansicht auf das Hebelgetriebe mit Koppelstange bei geschlossener Abdeckung.

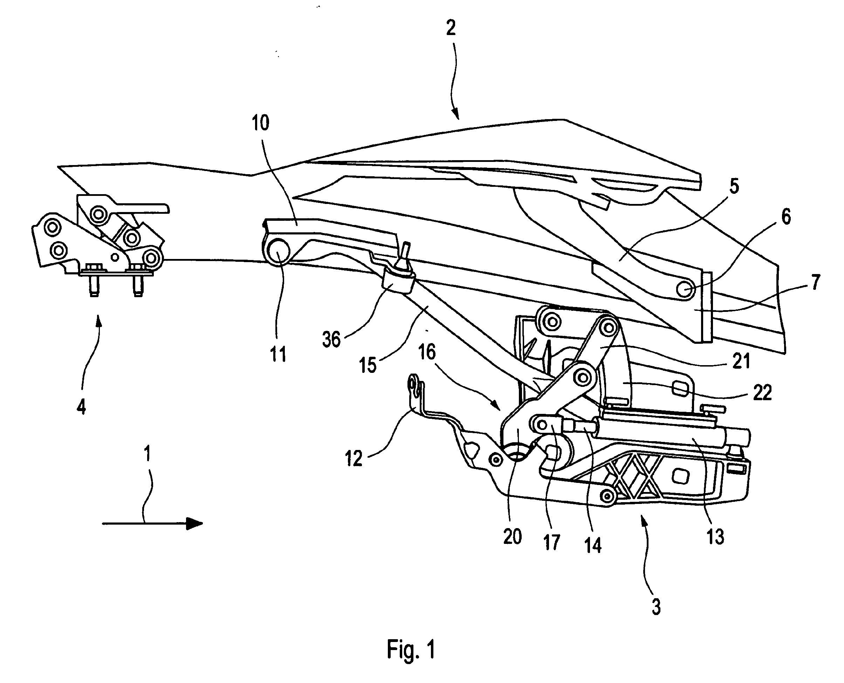

Fig. 1 zeigt eine seitliche Ansicht auf die geschlossene Abdeckung 2 mit im Hauptlager 3 montierten Hebelgetriebe 16 und Koppelstange 15. Die Abdeckung 2 ist mit ihrem der Fahrtrichtung 1 entgegen weisendem Ende über das Lager 4 bewegbar am Fahrzeugaufbau gelagert. In geschlossener Stellung wird die Abdeckung 2 an ihrem vorderen Ende über einen Verriegelungsbolzen 6 in einer Aufnahme 7 aufgenommen und geführt. Der Verriegelungsbolzen 6 ist hierbei am Ende eines Halters 5 befestigt, wobei der Halter 5 selber an der Unterseite der Abdeckung 2 angebracht ist. Die Aufnahme 7 ist am Fahrzeugaufbau beispielsweise mittels Schrauben befestigt und kann in der Regel über diese Schrauben in ihrer Position verstellt werden.

Kurz hinter der Mitte der Unterseite der Abdeckung 2 ist ein Halter 10 befestigt. Er bildet an seinem hinteren Ende die Schwenklagerung für die abdeckungsseitige Lagerung der Koppelstange 15. An seinem in Fahrtrichtung 1 weisenden Ende weist der Halter 10 einen seitwärts abstehenden Fortsatz auf, an dem ein aus Elastomer gefertigter Anschlagdämpfer 36 befestigt ist. Dieser Anschlagdämpfer 36 dient als oberer Anschlag für ein beispielsweise abgelegtes Verdeck und verhindert, dass das Verdeck in abgelegter Position bei Vertikalanregungen des Fahrzeugs an die Unterseite der Abdeckung 2 geraten kann. Selbstverständlich kann der Anschlagdämpfer 36 auch als Vertikalanschlag zwischen der Abdeckung 2 und dem Fahrzeug ausgelegt sein. Zur Lagefixierung und sicheren Aufnahme des Verdecks, kann dieses beispielsweise mit einem Dachlenker oder einer Dachstrebe in der Stütze 12 aufgenommen sein. Die Stütze 12 ist hierzu als zusätzliches Bauteil am Hauptlager 3 angebracht, wobei die Stütze 12 über ihre Verbindung zum Hauptlager 3 in ihrer Position mittels Befestigungsschrauben fixiert einstellbar ist. Es ist aber auch möglich, dass die Stütze 12 einstückig vom Hauptlager 3 ausgebildet ist.

Die Koppelstange 15 ist schwenkbar im Lager 11 an der Unterseite der Abdeckung 1 angebracht und mit ihrem anderen Ende schwenkbar mit einem vertikal nach unten weisenden Ende an einem Schenkel 23 eines Kniehebels 22 verbunden. Der Kniehebel 22 ist nahezu rechtwinklig ausgeführt und mit seinem anderen, nahezu waagrecht entgegen der Fahrtrichtung 1 weisenden Schenkel 24 an seinem Ende schwenkbar am Hauptlager 3 angebracht. Im Bereich des rechtwinkligen Knies ist der Zwischenlenker 21 über das Lager 26 schwenkbar am Kniehebel 22 gelagert. Das freie Ende des Zwischenlenkers 21 ist wiederum über die Lagerung 28 schwenkbar mit dem freien Ende des Lenkers 20 verbunden, wobei der Lenker 20 über die Lagerung 30 bewegbar am Hauptlager 3 aufgenommen ist. Bei geschlossener Abdeckung 2 befinden sich die hintereinander angeordneten Lenker 20, 21 in einer leicht zum hydraulischen Zylinder 13 weisenden abgeknickten Lage.

Das Hebelgetriebe 16 wird im Wesentlichen durch die Lenker 20, 21, dem Kniehebel 22 und der Koppelstange 15 gebildet, wobei zur Betätigung des Hebelgetriebes 16 der Lenker 20 in etwa mittiger Lage schwenkbar über einen Gabelkopf 17 im Lager 31 mit der Kolbenstange 14 eines hydraulischen Zylinders 13 verbunden ist. Der hydraulische Zylinder 13 ist mit seinem Ende schwenkbar am Hauptlager 3 in etwa waagrechter Lage in das Hauptlager 3 eingebaut. Der hydraulische Zylinder 13 und das Hebelgetriebe 16 ragen bei geschlossener Abdeckung 2 nicht aus den Abmessungen des Hauptlagers 3 heraus, so dass eine besonders kompakte Baueinheit entsteht. Diese Baueinheit kann in allen wesentlichen Umfängen vor Montage in das Fahrzeug zusammengebaut und eingestellt werden und erleichtert somit die Handhabe, aber auch die Servicearbeiten und die damit verbundenen Kosten erheblich.

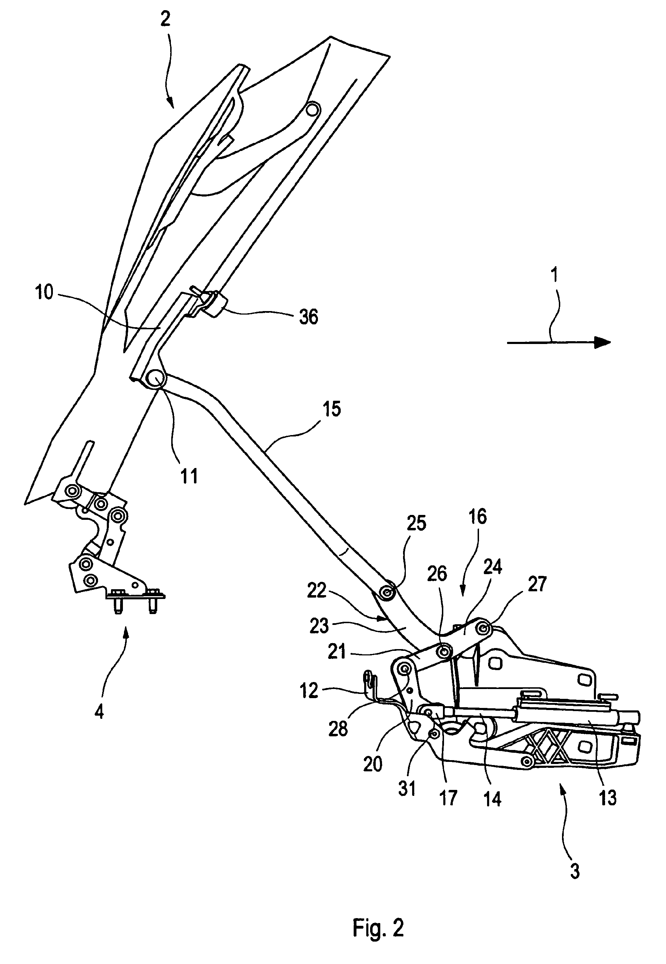

Zum Öffnen oder Schließen beispielsweise eines Verdecks muss zuvor die Abdeckung 2 in eine für die Verdeckbewegung unkritische Lage bewegt werden, was in einer Offenstellung der Abdeckung 2 in Fig. 2 abgebildet ist. Hierzu wird die Abdeckung 2 über die Lagerung 4 in eine nahezu vertikale Stellung geschwenkt, wobei das Lager 4 außer einer Schwenkbewegung zusätzliche translatorische vertikale und horizontale Verschiebungen ermöglicht. Zum Öffnen der Abdeckung 2 wird die Kolbenstange 14 aus dem hydraulischen Zylinder 13 ausgefahren. Der über den Gabelkopf 17 mit der Kolbenstange 14 verbundene Lenker 20 wird hierbei entgegen der Fahrtrichtung 1 geschwenkt. Der Zwischenlenker 21 wird über die schwenkbare Verbindung zum Lenker 20 mitgeschwenkt, wobei der Zwischenlenker 21 den Kniehebel 22 so verschwenkt, dass der in Ruhestellung vertikal nach unten zeigende Schenkel 23 des Kniehebels 22 in eine schräg nach oben zur Abdeckung 2 weisende Position bewegt wird. Hierbei nimmt dieser Schenkel 23 des Kniehebels 22 eine nahezu in Strecklage zur Koppelstange 15 ausgerichtete Position ein. Ebenfalls zeigen der Zwischenlenker 21 und der mit dem Hauptlager 3 schwenkbar verbundene Schenkel 24 des Kniehebels 22 eine annähernde Strecklage auf.

Bei geschlossener Abdeckung 2 weist der Lenker 21 eine zur Verbindungsgeraden der Schenkelenden gedachten Linie einen stumpfen Winkel auf. Auch ist der Winkel zwischen der Koppelstange 15 und dem der Koppelstange 15 zugeordnetem Schenkel 23 größer als 45 Winkelgrade. Zwischen der Wirklinie des hydraulischen Zylinders 13 und dem Lenker 20 ist bei geschlossener Abdeckung 2 ca. ein Winkel von 45 Winkelgraden eingestellt. Alle diese großen, stumpfen Winkel sind so gewählt, dass bei einer Betätigung des Hebelgetriebes 16 durch den hydraulischen Zylinder 13 eine leichtgängige Betätigung erfolgt und die Kräfte innerhalb des Hebelgetriebes 16 annähernd minimiert sind. Bei geöffneter Abdeckung 2 sind die Strecklagen und Anordnungen der Lenker 20, 21 und des Kniehebels 22 so bestimmt, dass beim Schließen der Abdeckung 2 der Schließvorgang beinahe vollständig durch die Gewichtskraft der Abdeckung 2 erfolgen kann.

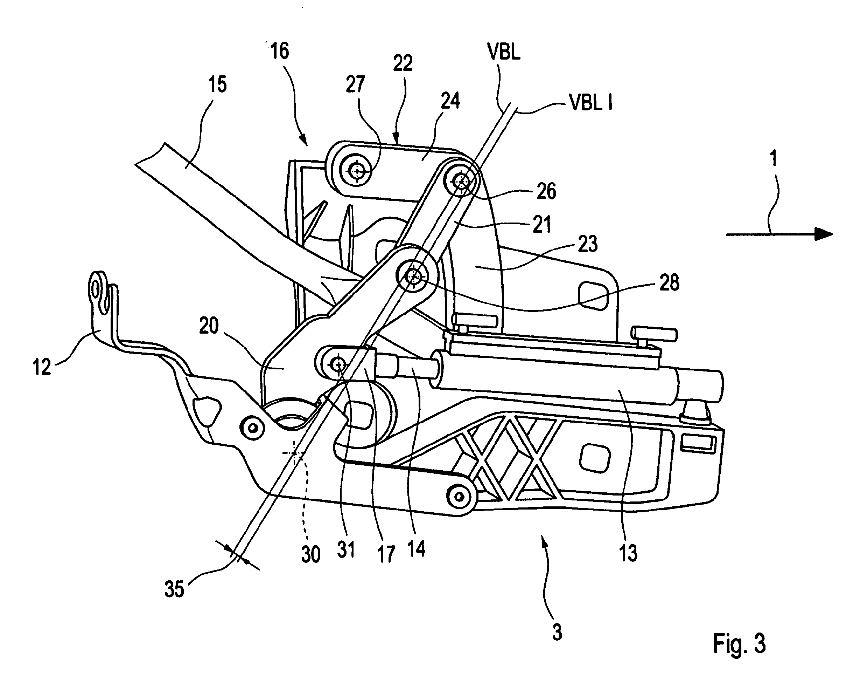

In Figur 3 ist eine Vergrößerung des Hebelgetriebes 16 mit Hauptlager 3, dem hydraulischen Zylinder 13 und der Koppelstange 15 bei geschlossener Abdeckung 2 entsprechend Figur 1 abgebildet. Die Kolbenstange 14 ist hierbei in den hydraulischen Zylinder 13 eingefahren, so dass über den Gabelkopf 17 am freien Ende der Kolbenstange 14 der Lenker 20 um die Lagerung 30 in eine dem hydraulischen Zylinder 13 zugewandten Endlage geschwenkt ist. An dem Lager 30 entgegen gesetzten Ende des Lenkers 20 ist über die Lagerung 28 der Zwischenlenker 21 einerseits schwenkbar am Lenker 20 angebracht und mit seinem anderen Ende über die Lagerung 26 mit dem Kniebereich des Kniehebels 22 verbunden.

Beim Öffnen der Abdeckung 2 schwenkt der Kniehebel 22 um die hauptlagerseitige Lagerung 27 so, dass sich der in seiner Endlage befindliche vertikal ausgerichtete Schenkel 23 des Kniehebels 22 in Richtung des Lenkers 20 bewegt. In dieser Endlage sind die beiden Lenker 20, 21 mit ihrer gemeinsamen Lagerung 28 geringfügig V-förmig in Richtung des hydraulischen Zylinders 13 geknickt, wobei der V-förmige Knick dem Abstand 35 der Verbindungslinie VBL (Verbindungslinie zwischen den Lagern 26 und 30) zu einer im Wesentlichen parallel verlagerten Verbindungslinie VBL 1 entspricht.

Ausgehend von dieser Endlage des Kniehebels 22 befindet sich die Lagerung 28 und somit die Lenker 20, 21 in einer Totpunktverreigelung, welche eine eigenständige und unbeabsichtigte Bewegung verhindert. Die beiden Lenker 20, 21 sind somit innerhalb des Hebelgetriebes 16 verriegelt und in ihrer Lage fixiert. Diese Verriegelung ermöglicht es, auf zusätzliche Verriegelungsglieder wie Haken und/oder Verriegelungsbetätigungen vollständig zu verzichten. Durch diese innere Verriegelung kann bei einem Versuch die Abdeckung 2 von außen zu öffnen, der Kniehebel 22, an dem die Koppelstange 15 als Übertragungselement zwischen der Abdeckung 2 und dem Hebelgetriebe 16 angeordnet ist, über seine Verbindung zum Kniehebel 22 nicht bewegt werden. Die einzige theoretische Bewegungsrichtung der Koppelstange 15 entspräche einer weiteren Schließbewegung der Abdeckung 2, wobei der Kniehebel 22 mit seinem vertikalen Schenkel 23 weiter in Fahrtrichtung 1 schwenken müsste. Diese Bewegung wäre denkbar, da hierbei die Lagerung 26 entgegen dem Uhrzeigersinn drehend über die Verbindung des Zwischenlenkers 21 die Lagerung 23 maximal bis zur Verbindungslinie VBL bewegen würde. Ein weiteres Schwenken wird ab dieser Position durch die Strecklage beider Lenker 20, 21 verhindert, da eine derartige weitere Bewegung eine Verlängerung einer der beiden Lenker 20, 21 erfordern würde. Zum Öffnen der Abdeckung 2 müsste ein Schwenken der Lenker 20, 21 in Richtung der Abdeckung 2 erfolgen, was aber durch die V-förmige Knickung entgegen dieser zum Öffnen notwendigen Bewegungsrichtung verhindert wird. Durch die V-förmige Knickung der Lenker 20, 21 wird in V-Richtung die "Schwenkwilligkeit" beider Lenker 20, 21 beeinflusst.

Beim Öffnen der Abdeckung 2 wird über den hydraulischen Zylinder 13 der Lenker 20 in Richtung der Abdeckung 2 geschwenkt, wobei eine Überdrückung der Lagerungen 28, 26, 27 erfolgt und somit die Lagerung 28 über die Verbindungslinie VBL hinaus in Richtung der Abdeckung 2 bewegt wird. Beide Lenker 20, 21 erfahren während dem weiteren Schwenken eine zunehmende Knickung zueinander, welches dem Hebelgetriebe 16 ein einwandfreies Schwenken ohne jegliche Klemmung ermöglicht. Dieser Vorgang wird erst durch Erreichen der Endlage der geöffneten Abdeckung 2 begrenzt. Diese ist dann erreicht, wenn sich die Koppelstange 15 und der Kniehebels 22 in einer Strecklage befinden. Hierzu sind dann die Lager 11, 25, 27 auf einer gemeinsamen Verbindungslinie liegend angeordnet.

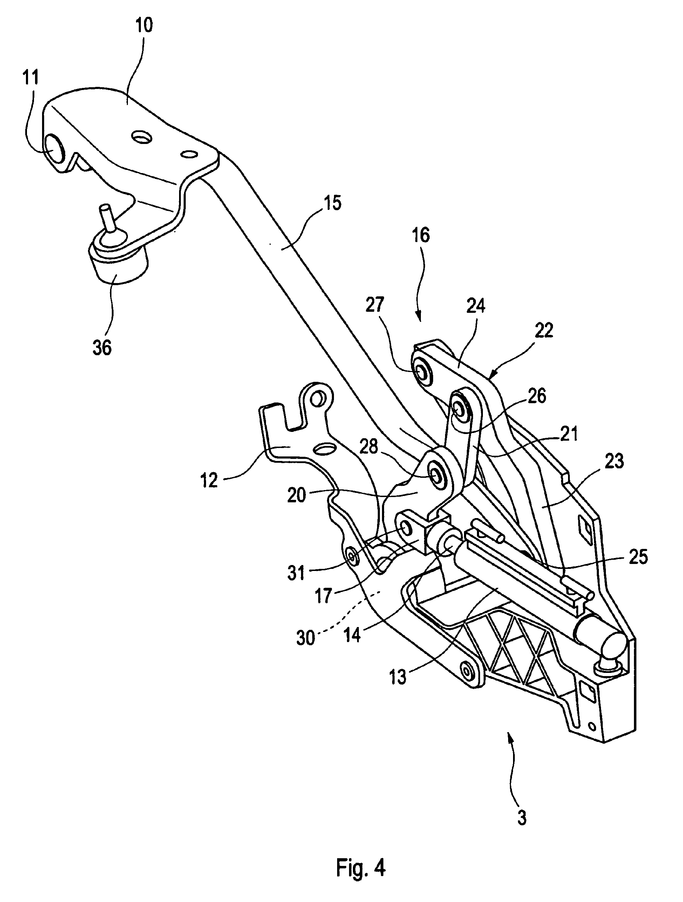

Figur 4 zeigt eine perspektivische Ansicht auf das Hebelgetriebe 16 mit Koppelstange 15 bei geschlossener Abdeckung 2. Bei dieser Ansicht ist die Schichtung der Bauteile (Lenker 20, 21, hydraulischer Zylinder 13, Kniehebel 22 und Koppelstange 15) zu erkennen. Der Kniehebel 22 ist hierbei dicht beabstandet zu einer vertikal ausgerichteten Wand des Hauptlagers 3 schwenkbar an dieser gelagert. Zwischen dem Schenkel 23 des Kniehebels 22 und dem hydraulischen Zylinder 13 ist am Ende des Schenkels 23 die Koppelstange bewegbar angebracht. Auf etwa gleicher Ebene befinden sich oberhalb der Koppelstange 15 der Zwischenlenker 21, der mit dem Lenker 20 verbunden ist, wobei sich der Lenker 20 in gleicher Ebene wie der hydraulische Zylinder 13 befindet. Die Stütze 12 ist als ein mehrfacher gebogener und gewundener Blechhalter ausgelegt und im Bereich der Lagerung 30 am Hauptlager 3 mittels geeigneten Befestigungsmitteln angebracht. Die abdeckungsseitige Lagerung 11 der Koppelstange 15 wird durch den Halter 10 abgebildet. Dieser Halter 10 ist ebenfalls wie die Stütze 12 ein aus einem mehrfach gebogenen Blech hergestelltes Bauteil, bei dem seitlich ein einstückig mit dem Halter 10 verbundener Fortsatz hervorragt. An diesem Fortsatz ist der Anschlagdämpfer 36 von der Seite des Hauptlagers 3 ausgehend verstellbar angeschraubt.

### Bezugszeichenliste

- 1: Fahrtrichtung
- 2: Abdeckung, Verdeckkastendeckel (VDKD)
- 3: Hauptlager
- 4: Lager
- 5: Halter
- 6: Verriegelungsbolzen
- 7: Aufnahme

- 10: Halter
- 11: Lager, Schwenklager
- 12: Stütze
- 13: hydraulischer Zylinder
- 14: Kolbenstange
- 15: Koppelstange
- 16: Hebelgetriebe
- 17: Gabelkopf

- 20: Lenker
- 21: Zwischenlenker
- 22: Kniehebellenker, Kniehebel
- 23: Schenkel, vertikaler Schenkel
- 24: Schenkel, horizontaler Schenkel
- 25: Lager
- 26: Lager
- 27: Lager
- 28: Lager
- 30: Lager
- 31: Lager

- 35: Abstand, paralleler Abstand
- 36: Anschlagdämpfer

- VBL: Verbindungslinie
- VBL l: parallele Verbindungslinie

## Patentansprüche

1. Anordnung zur Betätigung und Verriegelung einer Abdeckung (2) eines Fahrzeugs, insbesondere eines Kraftfahrzeugs, umfassend eine Koppelstange, einen Halter und ein Hebelgetriebe,
- wobei die Abdeckung (2) im montierten Zustand der Anordung über die Koppelstange (15) zwischen einer Offenstellung und einer Geschlossenstellung bewegbar ist,
- wobei die Koppelstange (15) über den Halter (10) schwenkbar an der Unterseite der Abdeckung (2) anbringbar ist und die Koppelstange (15) mit ihrem anderen Ende am Hebelgetriebe (16) schwenkbar befestigt ist,
- wobei das Hebelgetriebe (16) aus wenigstens zwei Lenkern (20, 21, 22) besteht,
- wobei wenigstens zwei Lenker (20, 21, 22) des Hebelgetriebes bei geschlossener Abdeckung (2) die Position einer Totpunktverriegelung zueinander einnehmen,
- wobei ein Lenker (20, 21, 22) des Hebelgetriebes mittels eines hydraulischen Zylinders (13) angetrieben wird,
**dadurch gekennzeichnet,**
- **dass** ein erster Lenker des Hebelgetriebes (16) als Kniehebel (22) ausgebildet ist,
- **dass** im Kniebereich des Kniehebels (22) ein zweiter, als Zwischenlenker (21) ausgebildeter Lenker mit einem Ende schwenkbar befestigt und mit seinem anderen Ende schwenkbar mit einem an einem Hauptlager (3) gelagerten dritten Lenker (20) verbunden ist.

2. Anordnung nach Anspruch 1,
**dadurch gekennzeichnet,**
**dass** der Kniehebel (22) annähernd einen Winkel von 90 Winkelgraden aufweist.

3. Anordnung nach Anspruch 1 oder 2,
**dadurch gekennzeichnet,**
**dass** in Geschlossenstellung der Abdeckung (2) der dritte Lenker (20) und der Zwischenlenker (21) eine V-förmig in Richtung des hydraulischen Zylinders (13) geknickte Position zueinander einnehmen und dass diese Position des zweiten und dritten Lenkers (20, 21) eine Totpunktverriegelung ist.

4. Anordnung nach einem der Ansprüche 1 bis 3,
**dadurch gekennzeichnet,**
**dass** in Geschlossenstellung der Abdeckung (2) ein Schenkel (23) des Kniehebels (22) im Wesentlichen vertikal zur Fahrtrichtung (1) ausgerichtet ist.

5. Anordnung nach einem der Ansprüche 1 bis 4,
**dadurch gekennzeichnet,**
- **dass** der Kniehebel (22) über eine erste Lagerung (26) am Zwischenlenker (21) gelagert ist,
- **dass** der Kniehebel (22) über eine zweite Lagerung (27) am Hauptlager (3) gelagert ist,
- **dass** der Zwischenlenker (21) über eine dritte Lagerung (28) am dritten Lenker (20) gelagert ist,
- **dass** der dritte Lenker (20) über eine vierte Lagerung (30) am Hauptlager (3) gelagert ist.

6. Anordnung zumindest nach Anspruch 5,
**dadurch gekennzeichnet,**
**dass** die erste, zweite, dritte und vierte Lagerung (26, 27, 28, 30) ein Viergelenkgetriebe bilden.

7. Anordnung zumindest nach Anspruch 5,
**dadurch gekennzeichnet,**
**dass** in Geschlossenstellung der Abdeckung (2) eine fünfte Lagerung (31) zwischen dem dritten Lenker (20) und einem Gabelkopf (17) auf einer Verbindungslinie (VBL) zwischen der ersten und der vierten Lagerung (26, 30) liegt.

8. Anordnung zumindest nach den Ansprüchen 5 und 7,
**dadurch gekennzeichnet,**
**dass** die Hebelverhältnisse zwischen der vierten und fünften Lagerung (30, 31) einerseits und der ersten und dritten Lagerung (26, 28) andererseits annähernd gleich sind.

9. Anordnung zumindest nach Anspruch 5,
**dadurch gekennzeichnet,**
**dass** in Geschlossenstellung der Abdeckung (2) die Verbindungslinie (VBL) der ersten und vierten Lagerung (26, 30) annähernd orthogonal zur Koppelstange (15) ausgerichtet ist.

10. Anordnung zumindest nach Anspruch 7,
**dadurch gekennzeichnet,**
**dass** in Geschlossenstellung der Abdeckung (2) eine sechste Lagerung (25) zwischen dem Kniehebel (22) und der Koppelstange (15) etwa im Schnittpunkt einer vertikalen Linie durch die erste Lagerung (26) und einer horizontalen Linie durch die fünfte Lagerung (31) liegt.

## Claims

1. Arrangement for actuating and locking a cover (2) of a vehicle, in particular of a motor vehicle, comprising a coupling rod, a bracket and a lever mechanism,
- wherein, in the assembled state of the arrangement, the cover (2) can be moved by means of the coupling rod (15) between an open position and a closed position,
- wherein the coupling rod (15) can be pivotably connected via the bracket (10) to the underside of the cover (2) and the coupling rod (15) is pivotably fastened with its other end to the lever mechanism (16),
- wherein the lever mechanism (16) is composed of at least two links (20, 21, 22),
- wherein, when the cover (2) is closed, at least two links (20, 21, 22) of the lever mechanism assume a dead-centre locking position with respect to one another,
- wherein one link (20, 21, 22) of the lever mechanism is driven by means of a hydraulic cylinder (13),
**characterized**
- **in that** a first link of the lever mechanism (16) is in the form of a knee lever (22),
- **in that** a second link in the form of an intermediate link (21) is pivotably fastened with one end in the knee region of the knee lever (22) and is pivotably connected with its other end to a third link (20) mounted on a main support (3).

2. Arrangement according to Claim 1,
**characterized**
**in that** the knee lever (22) has an angle of approximately 90 degrees.

3. Arrangement according to Claim 1 or 2,
**characterized**
**in that**, in the closed position of the cover (2), the third link (20) and the intermediate link (21) assume a position with respect to one another in which they are angled in a V shape in the direction of the hydraulic cylinder (13), and in that said position of the second and third links (20, 21) is a dead-centre locking position.

4. Arrangement according to one of Claims 1 to 3,
**characterized**
**in that**, in the closed position of the cover (2), one leg (23) of the knee lever (22) is aligned substantially vertically with respect to the direction of travel (1).

5. Arrangement according to one of Claims 1 to 4,
**characterized**
- **in that** the knee lever (22) is mounted on the intermediate link (21) by means of a first bearing arrangement (26),
- **in that** the knee lever (22) is mounted on the main support (3) by means of a second bearing arrangement (27),
- **in that** the intermediate link (21) is mounted on the third link (20) by means of a third bearing arrangement (28),
- **in that** the third link (20) is mounted on the main support (3) by means of a fourth bearing arrangement (30).

6. Arrangement at least according to Claim 5,
**characterized**
**in that** the first, second, third and fourth bearing arrangements (26, 27, 28, 30) form a four-bar mechanism.

7. Arrangement at least according to Claim 5,
**characterized**
**in that**, in the closed position of the cover (2), a fifth bearing arrangement (31) between the third link (20) and a fork head (17) lies on a connecting line (VBL) between the first and the fourth bearing arrangements (26, 30).

8. Arrangement at least according to Claims 5 and 7,
**characterized**
**in that** the lever ratios between the fourth and fifth bearing arrangements (30, 31) on the one hand and the first and third bearing arrangements (26, 28) on the other hand are approximately equal.

9. Arrangement at least according to Claim 5,
**characterized**
**in that**, in the closed position of the cover (2), the connecting line (VBL) of the first and fourth bearing arrangements (26, 30) is aligned approximately orthogonally with respect to the coupling rod (15).

10. Arrangement at least according to Claim 7,
**characterized**
**in that**, in the closed position of the cover (2), a sixth bearing arrangement (25) between the knee lever (22) and the coupling rod (15) lies approximately at the point of intersection of a vertical line through the first bearing arrangement (26) and of a horizontal line through the fifth bearing arrangement (31).

## Revendications

1. Système d'actionnement et de verrouillage pour un couvercle (2) d'un véhicule, en particulier d'un véhicule automobile, comprenant une tige de couplage, un support et un mécanisme à leviers,
- dans lequel le couvercle (2), dans l'état monté du système, est déplaçable entre une position ouverte et une position fermée au moyen de la tige de couplage (15),
- dans lequel la tige de couplage (15) peut être installée sur la face inférieure du couvercle (2) de façon pivotante au moyen du support (10) et la tige de couplage (15) est fixée de façon pivotante par son autre extrémité au mécanisme à leviers (16),
- dans lequel le mécanisme à leviers (16) se compose d'au moins deux bielles (20, 21, 22),
- dans lequel au moins deux bielles (20, 21, 22) du mécanisme à leviers prennent, lorsque le couvercle (2) est fermé, la position d'un verrouillage de point mort l'une par rapport à l'autre,
- dans lequel une bielle (20, 21, 22) du mécanisme à leviers est entraînée au moyen d'un cylindre hydraulique (13),
**caractérisé en ce que**
- une première bielle du mécanisme à leviers (16) est formée par un levier coudé (22), et **en ce que**
- une deuxième bielle, sous forme de bielle intermédiaire (21), est fixée de manière pivotante par une extrémité dans la région du coude du levier coudé (22) et est reliée de façon pivotante par son autre extrémité à une troisième bielle (20) montée sur un palier principal (3).

2. Système selon la revendication 1, **caractérisé en ce que** le levier coudé (22) présente approximativement un angle de 90 degrés d'angle.

3. Système selon la revendication 1 ou 2, **caractérisé en ce que**, dans la position fermée du couvercle (2), la troisième bielle (20) et la bielle intermédiaire (21) occupent l'une par rapport à l'autre une position pliée en forme de v en direction du cylindre hydraulique (13) et **en ce que** cette position de la deuxième et de la troisième bielles (20, 21) est un verrouillage de point mort.

4. Système selon l'une quelconque des revendications 1 à 3, **caractérisé en ce que**, dans la position fermée du couvercle (2), une branche (23) du levier coudé (22) est orientée essentiellement à la verticale par rapport à la direction de déplacement (1).

5. Système selon l'une quelconque des revendications 1 à 4, **caractérisé en ce que**
- le levier coudé (22) est monté sur la bielle intermédiaire (21) au moyen d'un premier palier (26),
- le levier coudé (22) est monté sur le palier principal (3) au moyen d'un deuxième palier (27),
- la bielle intermédiaire (21) est montée sur la troisième bielle (20) au moyen d'un troisième palier (28),
- la troisième bielle (20) est montée sur le palier principal (3) au moyen d'un quatrième palier (30).

6. Système au moins selon la revendication 5, **caractérisé en ce que** les premier, deuxième, troisième et quatrième paliers (26, 27, 28, 30) forment un quadrilatère articulé.

7. Système au moins selon la revendication 5, **caractérisé en ce que**, dans la position fermée du couvercle (2), un cinquième palier (31) entre la troisième bielle (20) et une tête de fourchette (17) se trouve sur une ligne de liaison (VBL) entre le premier et le quatrième paliers (26, 30).

8. Système au moins selon les revendications 5 et 7, **caractérisé en ce que** les rapports des leviers entre le quatrième et le cinquième paliers (30, 31) d'une part et le premier et le troisième paliers (26, 28) d'autre part sont approximativement égaux.

9. Système au moins selon la revendication 5, **caractérisé en ce que**, dans la position fermée du couvercle (2), la ligne de liaison (VBL) des premier et quatrième paliers (26, 30) est orientée à peu près orthogonalement à la tige de couplage (15).

10. Système au moins selon la revendication 7, **caractérisé en ce que**, dans la position fermée du couvercle (2), un sixième palier (25) entre le levier coudé (22) et la tige de couplage (15) se trouve environ au point d'intersection d'une ligne verticale passant par le premier palier (26) et d'une ligne horizontale passant par le cinquième palier (31).
